# EUROPÄISCHE PATENTANMELDUNG

(11) **EP 3 474 564 A1**
(43) Veröffentlichungstag der Anmeldung: **24.04.2019**
(21) Anmeldenummer: 18201058.7
(22) Anmeldetag: 17.10.2018
(51) Int. Cl.: H04Q 9/00, G05B 9/03

(54) **SENSOR UND VERFAHREN ZUR SERIELLEN ÜBERMITTLUNG VON DATEN DES SENSORS**

(30) Priorität: 18.10.2017 CH 12752017
(71) Anmelder: ELESTA GmbH, 7310 Bad Ragaz (CH)
(72) Erfinder: Steiner, Roman, 8725 Ernetschwil (CH); Guntli, Andreas, 8880 Walenstadt (CH); Möhr, Raphael, 7304 Maienfeld (CH)
(74) Vertreter: Riederer Hasler & Partner Patentanwälte AG

(57) **Zusammenfassung**

Die Erfindung betrifft ein Verfahren zur seriellen Übermittlung von Daten des Sensors von einem Sensor an ein Sicherheitskontrollgerät, wobei der Sensor zwei Datenverarbeitungseinheiten aufweist, welche sowohl die Daten des Sensors als auch die Anfragedaten des Sicherheitskontrollgerätes prüfen und verarbeiten, wobei jeder Datenverarbeitungseinheiten zeitgleich dieselben Anfragedaten des Sicherheitskontrollgerätes zugeführt werden und die Datenverarbeitungseinheiten nach Empfang der Daten zeitglich eine Prüfung der Anfragedaten durchführen, wobei die Datenverarbeitungseinheiten unabhängig voneinander arbeiten. Die Erfindung betrifft ausserdem eine Sensoreinheit mit einem Sensor, einem Sicherheitskontrollgerät und dem Sensor zugeordneten Datenverarbeitungseinheiten, wobei das Sicherheitskontrollgerät über einen gemeinsamen seriellen Bus mit den Datenverarbeitungseinheiten verbunden ist und dass die Datenverarbeitungseinheiten unabhängig voneinander sind und dabei dazu ausgelegt sind, zeitgleich die Datenverarbeitung durchzuführen. Ferner betrifft die Erfindung ein System zur Absicherung von Gefahrenbereichen von Fertigungseinrichtungen mit einer erfindungsgemässen Sensoreinheit.

## Beschreibung

Die Erfindung betrifft ein Verfahren zur seriellen Übermittlung von Daten eines Sensors an ein Sicherheitskontrollgerät gemäss dem Oberbegriff des Anspruch 1. Ferner betrifft die Erfindung eine Sensoreinheit gemäss dem Oberbegriff des Anspruch 8, insbesondere zur Durchführung des besagten Verfahrens und ein System mit einer solchen Sensoreinheit.

Sicherheitssensoren beobachten in der Regel Sicherheitsbereiche oder sichern diese ab und liefern Informationen über den Zustand des Sicherheitsbereichs. Zum Beispiel können derartige Sicherheitssensoren an Sicherheitstüren für Werkzeugmaschinen oder für industrielle Fertigungseinrichtungen insbesondere mit Robotern verwendet werden. Bei solchen Maschinen ist eine Sicherheitsanforderung, dass sich während ihres Betriebes keine Person im Arbeitsbereich der Maschine befinden darf. Hierzu ist jener Bereich, in dem sich beispielsweise ein Maschinenführer zur Einrichtung, Justierung oder Wartung der Maschine aufhalten muss durch Schutzwände umzäunt und der Zugang erfolgt über die genannten Sicherheitstüren.

Beispielsweise können als Sicherheitssensoren insbesondere Sensoren verstanden werden, die in der Art von Näherungssensoren, die Annäherung eines Gegenstands berührungslos detektieren können. Es ist bekannt hierfür sogenannte RFID (radiofrequency identification) - Elemente einzusetzen. Diese bestehen aus einem meist passivem RFID-Sender, auch RFID-Tag genannt, und einem RFID-Empfänger, der oft auch als RFID-Lesegerät bezeichnet wird. Bei Annäherung des RFID-Senders an den RFID-Empfänger wird der RFID-Sender durch ein vom RFID-Empfänger ausgestrahlte elektromagnetisches Wechselfeld angeregt und mit Energie versorgt. Der Mikrocontroller des RFID-Senders ist dann in der Lage die vom RFID-Empfänger gesendeten Befehle zu decodieren und entsprechende Aktionen zu setzen, wie beispielsweise das Ausgeben seiner gespeicherten Information oder das Einschreiben von neuem Speicherinhalten.

Sicherheitstüren werden nun beispielsweise dadurch gesichert, dass an einem ersten Türelement ein RFID-Sender und an einem zweiten Türelement ein RFID-Empfänger angebracht wird. Ist die Sicherheitstüre geschlossen befindet sich der RFID-Sender im Empfangsbereich des RFID-Empfängers, RFID-Sender und RFID-Empfänger sind damit gekoppelt und ein Befehls- und Informationsaustausch ist möglich. Wird die Sicherheitstüre geöffnet, kann der RFID-Empfänger den RFID-Sender nicht mehr detektieren bzw. auslesen und der RFID-Empfänger kann dann eine entsprechende Information an ein Sicherheitskontrollgerät und damit in der Folge an eine übergeordnete Steuereinrichtung einer Maschine oder sonstigen Fertigungseinrichtung übermitteln, die verhindert, dass die Maschine anläuft und eine allenfalls im Gefahrenbereich befindlichen Person verletzt. Sicherheitskontrollgeräte können gebildet sein aus relativ einfachen Sicherheitsrelais bis hin zu komplexen speicherprogammierbaren Steuerungen (SPS).

Für Sicherheitseinrichtungen dieser Art ist ein Sicherheitsintegrationslevel 3 (SIL3) gemäss der Norm IEC 61508 einzuhalten. Diese Einrichtungen haben eine zweifache Sicherheit zu gewährleisten, d.h. ein auftretender Fehler, beispielsweise in der Datenübertragung oder bei der Datenverarbeitung ist insofern redundant, als dass dies noch zu keiner Fehlfunktion der Sicherheitseinrichtung führt. Es ist daher beispielsweise bekannt, die vom Sicherheitssensor ermittelten Daten in einer ersten Datenverarbeitungseinheit einzulesen und zu verarbeiten und danach die eingelesenen Daten in einer zweiten Datenverarbeitungseinheit erneut zu verarbeiten bzw. die verarbeiteten Daten zu überprüfen. In der Folge vergleichen diese beiden Datenverarbeitungseinheiten ihre Ergebnisse und leiten insbesondere sicherheitsrelevante Informationen, wie beispielsweise die Information «Türe ist geschlossen» (was für eine übergeordnete Steuereinrichtung bedeuten kann, dass die Maschine anlaufen darf), nur dann an ein Sicherheitskontrollgerät bzw. an eine übergeordnete Steuereinrichtung einer Maschine weiter, wenn die Ergebnisse der Überprüfung übereinstimmen und somit davon ausgegangen werden kann, dass die Datenkonsistenz gegeben ist. In der Regel sind die separaten Datenverarbeitungseinheiten unterschiedlich aufgebaut, beispielsweise durch die Verwendung unterschiedlicher elektronischer Bauteile, wobei trotzdem beide Datenverarbeitungseinheiten bei korrekter Funktion dieselben Ergebnisse erzeugen.

Generell besteht bei Sicherheitssensoren die Anforderung, dass erfasste Daten des Sensors schnell an Sicherheitskontrollgeräte bzw. an Steuereinrichtungen von Maschinen weitergegeben werden können, um die Risikozeit zu minimieren. Die zuvor erwähnte, zweistufige und hintereinander ablaufende Prüfung stellt zwar den sicheren Empfang und die richtige Verarbeitung der Daten sicher, läuft aber verständlicherweise dem Ziel der schnellen Reaktionszeiten der Steuereinrichtungen zuwider.

Es wurden verschiedenen Standards geschaffen, um eine Kommunikation zwischen Sensoren oder Aktoren und Steuer- und Überwachungseinrichtungen zu ermöglichen. Einer davon ist der sogenannte IO-Link-Standard gemäss IEC61131-9 bzw. gemäss IO-Link System Description - Technology and Application, Version July 2013, Order number 4.392 der erweitert wurde, um auch bei sicherheitsrelevanten Anwendungen eingesetzt werden zu können. Bekannt ist diese Erweiterung unter IO-Link Safety Standard gemäss IO-Link Safety System Extensions Specification, Version 1.0, April 2017, Order No: 10.092. Weitere bekannte Standards für sicherheitsrelevante Anwendungen sind beispielsweise: der AS-i Bus Standard oder der CANopen-Safety-Standard.

Diese Safety Standards gewährleisten die sichere Kommunikation zwischen Sensoren oder Aktoren und Steuer- und Überwachungseinrichtungen. Bezogen auf die vorliegende Erfindung bedeutet dies, dass beispielsweis die Einhaltung des IO-Link Safety Standard dazu führt, dass die sicherheitsrelevante Kommunikation zwischen Sicherheitskontrollgerät und Sensor bzw. zwischen Sicherheitskontrollgerät und Datenverarbeitungseinheiten des Sensors fehlersicher ist, obwohl die Daten nur über einen einzigen Übertragungsweg gesendet werden. Die Redundanz ist also nicht durch die doppelte Ausführung von Schaltungsanordnungen oder dergleichen gegeben, sondern wird durch die Einhaltung des IO-Link Safety Standards gewährleistet.

Der Übertragungsweg ist also fehlersicher, es bleibt aber offen, wie die sicherheitsrelevanten Daten oder deren elektrischen Signale in einem sicherheitsrelevanten Gerät sicher disponiert, d. h. hinein oder hinausgeleitet, sowie abgespeichert und verarbeitet werden müssen, damit die Anforderungen der IEC61508 gewährleistet bleiben bzw. werden. Die Kommunikation zwischen Sicherheitskontrollgerät und einem übergeordneten System erfolgt im Übrigen in bekannter Weise durch die Nutzung bekannter Feldbussysteme.

DE 10 2007 019 846 beschreibt ein Verfahren und eine Vorrichtung zur Überwachung einer Funktionseinheit in einem Fahrzeug. Die Vorrichtung umfasst einen Datenbus, ein Auswertegerät mit einer ersten Auswerteeinheit, einer zweiten Auswerteeinheit, wenigstens einen Sensor zur Erfassung eines Messwerts und ein Steuergerät, wobei jede Auswerteeinheit mit wenigstens einem Sensor verbunden ist. Jede Auswerteeinheit erhält Daten von wenigstens einem Sensor und wertet diese mittels Berechnung und Plausibilitätsprüfung zu Ergebnissen aus. Die zweite Auswerteeinheit ist zur Ausgabe von Ergebnissen über den Datenbus mit dem Steuergerät verbunden, und die erste Auswerteeinheit ist zum Einlesen der Ergebnisse ebenfalls mit dem Datenbus verbunden. Die erste Auswerteeinheit liest das Ergebnis vom Datenbus ein und vergleicht dieses mit dem eigenen Ergebnis. In einem Fehlerfall verhindert die erste Auswerteeinheit eine Ausgabe von weiteren Ergebnissen auf den Datenbus. Ein derartiges Verfahren ermöglicht einen Verzicht auf aufwendige bidirektionale Kommunikationsschritte zwischen den Auswerteeinheiten. Hauptvorteil des beschriebenen Verfahrens ist somit die doppelte Nutzung des auf den Datenbus ausgegebenen Ergebnisses zur Information der zweiten Auswerteeinheit und zur Information des Steuergerätes und somit ein Verzicht auf ein aufwendiges Abstimmungsverfahren zwischen den Auswerteeinheiten.

DE 10 2011 102 274 offenbart ein Verfahren zum Betreiben eines Sicherheitssteuergeräts, das einen Gleitkommawert in Abhängigkeit eines Eingangssignals ermittelt. Über Signalleitungen wird der ermittelte Gleitkommawert an zwei Berechnungseinheiten weitergeleitet, die jeweils ein Eingangsintervall in Abhängigkeit des Gleitkommawerts bestimmen. Die Ergebnisintervalle werden an zwei unabhängige Vergleichseinheiten weitergeleitet, die über weitere Leitungen das jeweilige Ergebnisintervall der anderen Berechnungseinheit eingespeist erhalten. Innerhalb der Vergleichseinheiten werden die Ergebnisintervalle miteinander verglichen. Überlappen die Ergebnisintervalle, so wird geprüft, ob ein Ausgabekriterium erfüllt ist. Das Ausgabekriterium ist dann erfüllt, wenn die Ergebnisintervalle einen gemeinsamen Wert beinhalten, der einer geöffneten Schutztür entspricht. Der Vorteil des Verfahrens ist, dass durch den Gleitkommawert die Genauigkeit des Sicherheitssteuergeräts beim Erfassen des Eingangssignals gegenüber ganzzahligen Operationen erhöht wird.

EP-A-2 339 415 offenbart ein Steuersystem für eine Baumaschine mit wenigstens einem Sensor und wenigstens einer Steuerung, wobei zwischen dem Sensor und der Steuerung eine serielle Verbindung besteht. Sensor und Steuerung sind vorzugsweise zwei- oder mehrkanalig ausgeführt. Innerhalb eines Sensors sind wenigstens zwei Meßwertaufnehmer und wenigstens zwei Verarbeitungseinheiten redundant und/oder diversitär zueinander angeordnet. Ausserdem sind wenigstens zwei Verarbeitungseinheiten des Sensors über eine Datenverbindung miteinander gekoppelt, wobei die Verarbeitungseinheiten synchron betrieben werden. Im Betrieb werden die von den Sensoren stammenden Messwerte intern auf Richtigkeit überprüft und anschließend in einem Datenpaket des Meßwertprotokolls abgelegt, das mit einer Sicherheitsinformation versehen wird. Dazu werden die Messwerte zwischen den einzelnen Verarbeitungseinheiten ausgetauscht und eine Plausibilitätsprüfung durchgeführt. Liegen die Abweichungen der Messwerte innerhalb definierter Toleranzgrenzen, wird die Messung als plausibel eingestuft und die involvierten Verarbeitungseinheiten einigen sich auf einen für alle Verarbeitungseinheiten geltenden Messwert. Die Steuerung weist vorzugsweise ebenfalls zwei redundant und/oder diversitär zueinander angeordnete Steuereinheiten auf, die über ein beliebiges Bussystem miteinander verknüpft sind, sodass ein Datenaustausch zwischen diesen ermöglicht ist.

Gemäss einer Ausführungsvariante sendet eine Verarbeitungseinheit ihr Signal über den Bus und alle weiteren Verarbeitungseinheiten hören das von der einen Verarbeitungseinheit auf den Bus gelegte Sendesignal mit und überprüfen dieses auf Richtigkeit. Für jeden Kanal eines Sensors ist zudem eine individuelle Sensorbeschreibung gespeichert, die herstellerseitig fest abgelegt ist. Diese Sensorbeschreibung stellt eine eindeutige und individuelle Kennzeichnung jedes eingesetzten Sensors dar. Auf Grundlage der Sensorbeschreibung ist mittels eines spezifizierten Algorithmus ein individueller Schlüssel für jeden Sensor berechenbar, der bevorzugt bei der Übertragung des Meßwerts vom Sensor zur Steuerung ergänzend übermittelt wird. Aus dem Meßwert, einem Zeitstempel und einer codierten Sicherheitsinformation generiert das Messwertprotokoll ein Datenpaket, wobei die codierte Sicherheitsinformation mittels der Sicherheits- und/oder Schutzfunktion zweckmäßig aus dem Meßwert, dem Zeitstempel und dem individuellen Schlüssel des Sensors berechnet wird. Mit Hilfe der Sicherheits- und/oder Schutzfunktion lassen sich nach Auswertung der Inhalte der übermittelten Datenpakete mögliche Datenmanipulationen bzw. Übertragungsfehler empfängerseitig erkennen und besonders bevorzugt korrigieren

Es ist Aufgabe der Erfindung ein Verfahren zur seriellen Übermittlung von Daten des Sensors von einem Sicherheitskontrollgerät an einen Sensor so weiterzubilden, dass Anfragen sicher eingelesen und ausgegeben sowie sicher abgespeichert und verarbeitet werden können. Ebenso ist Aufgabe der Erfindung eine Sensoreinheit und ein System zur Absicherung von Fertigungseinrichtungen so weiterzubilden, dass Anfragen sicher eingelesen und ausgegeben sowie sicher abgespeichert und verarbeitet werden. Hierbei soll die Reaktionszeit bzw. die Antwortzeit der Sensoreinheit bzw. des Systems auf ein Minimum reduziert werden, um beispielsweise die bei der Auslegung und Planung zu berücksichtigende Risikozeit der gesamten Fertigungseinrichtung zu minimieren.

Die Aufgabe wird gelöst für ein Verfahren nach dem Oberbegriff des Anspruchs 1 durch zeitgleiches Zuführen derselben Daten und zeitgleiche Prüfung der empfangen Daten durch die Datenverarbeitungseinheiten, wobei die Datenverarbeitungseinheiten unabhängig voneinander arbeiten.

Hierbei ist anzumerken, dass Prozessdaten insbesondere dann, wenn der Sensor als RFID-Empfänger ausgebildet ist, der die Anwesenheit eines RFID-Senders detektiert, im Speicher des RFID-Senders abgelegt sind und Informationen wie Identifikationsnummern, Informationen zur Art des RFID-Senders oder des Senderzustands oder Check-Summen und dergleichen beinhalten können. Somit können Prozessdaten auch Diagnosedaten des Sensors umfassen. Unter Anfragedaten sind insbesondere Anfragen oder Befehle des Sicherheitskontrollgerätes zu verstehen.

Vorzugsweise, vergleichen die Datenverarbeitungseinheiten die Ergebnisse ihrer Prüfung miteinander und melden bei fehlender Übereinstimmung einen Fehler an das Sicherheitskontrollgerät.

Rückmeldungen bzw. Antwortdaten von der ersten Datenverarbeitungseinheit werden zeitgleich an das Sicherheitskontrollgerät und die zweite Datenverarbeitungseinheit zurückgegeben, wobei das Sicherheitskontrollgerät und die zweite Datenverarbeitungseinheit zeitgleich eine Prüfung der Antwortdaten durchführen. Vorzugsweise vergleichen die zweite Datenverarbeitungseinheit und das Sicherheitskontrollgerät die Ergebnisse ihrer Prüfung miteinander und beurteilen bei fehlender Übereinstimmung die Antwortdaten als fehlerhaft. Somit kann die zweite Datenverarbeitungseinheit zeitgleich mit dem Sicherheitskontrollgerät eine Plausibilisierung der Daten durchführen und bei einer Abweichung oder Inkonsistenz mit erheblicher Zeiteinsparung eine Ausnahme bzw. einen Fehler melden.

Beispielsweise kann die Kommunikation des Sensors, d.h. insbesondere der Datenverarbeitungseinheiten mit dem Sicherheitskontrollgerätes unter Einhaltung des IO-Link Safety-Standards, des AS-i Bus Standards oder des CANopen-Safety-Standard erfolgen.

Wie zuvor dargestellt lesen die beiden Datenverarbeitungseinheiten unabhängig voneinander die Daten ein oder geben die beiden Datenverarbeitungseinheiten unabhängig voneinander die Daten aus. Dieser geschieht erfindungsgemäss zweikanalig und unabhängig voneinander. Es ist anzumerken, dass das Einlesen, das Ausgeben und die Verarbeitung der Daten unabhängig voneinander erfolgt und die Datenverarbeitungseinheiten in diesem Sinne unabhängig voneinander sind. In der Regel unterscheiden sich die Datenverarbeitungseinheiten auch hinsichtlich ihrer konkreten hardwaremässige Ausführung; allerdings können die Datenverarbeitungseinheiten beispielsweise eine gemeinsame Spannungsversorgung aufweisen und trotzdem unabhängig voneinander im Sinne der vorliegenden Erfindung sein.

Die Aufgabe wird ferner gelöst für eine Sensoreinheit nach dem Oberbegriff des Anspruchs 6 durch die Verbindung des Sicherheitskontrollgerätes mit den Datenverarbeitungseinheiten über einen einzigen, gemeinsamen seriellen Bus.

In einer Ausführungsform ist bei der erfindungsgemässen Sensoreinheit das Sicherheitskontrollgerät über einen gemeinsamen seriellen Bus mit den Datenverarbeitungseinheiten verbunden ist die zweite Datenverarbeitungseinheit (3, 4) und das Sicherheitskontrollgerät sind dazu ausgelegt zeitgleich die Datenkonsistenz und die korrekte Verarbeitung der ihnen von der ersten Datenverarbeitungseinheit zugeführten Daten zu prüfen. Hierdurch ist eine schnelle Verarbeitung und Prüfung der Daten möglich.

In einer bevorzugten Ausführungsform ist der Bus zur bidirektionalen Datenübertragung ausgebildet und weiteres können das Sicherheitskontrollgerät und die Datenverarbeitungseinheiten, dazu ausgelegt sein, miteinander zu kommunizieren und dabei den IO-Link Safety-Standard, den AS-i Bus Standard oder den CANopen-Safety-Standard zu nutzen.

In einer weiteren bevorzugten Ausführungsform ist der Sensor als RFID-Empfänger ausgebildet ist, welcher auf die Annäherung eines RFID-Senders anspricht.

Generell sind die Vorteile der zuvor in verschiedenen Ausführungsformen beschriebenen Verfahren und Sensoren insbesondere darin zu sehen, dass durch die zeitgleiche Verarbeitung jeweils der Anfragedaten bzw. der Antwortdaten Zeit gespart wird und das gesamte Sicherheitssystem daher sehr schnelle Reaktionszeiten hat, was sich insgesamt bei der sicherheitstechnischen Auslegung von übergeordneten System wie beispielsweise Fertigungseinrichtungen positiv auswirkt. Eine derartige Sensoreinheit kann daher in vorteilhafter Weise in einem System zur Absicherung von Gefahrenbereichen von Fertigungseinrichtungen eingesetzt werden.

Ferner wird mit erfindungsgemäss ausgeführten Verfahren und Sensoren erreicht, dass sicherheitsrelevante Daten in einem sicherheitsrelevanten Gerät unter Einhaltung der Anforderungen der IEC61508 für SIL3 über den IO-Link Safety Standard oder andere Sicherheits-Kommunikationsprotokolle, wie beispielsweise AS-i Bus oder CANopen-Safety kommuniziert werden können.

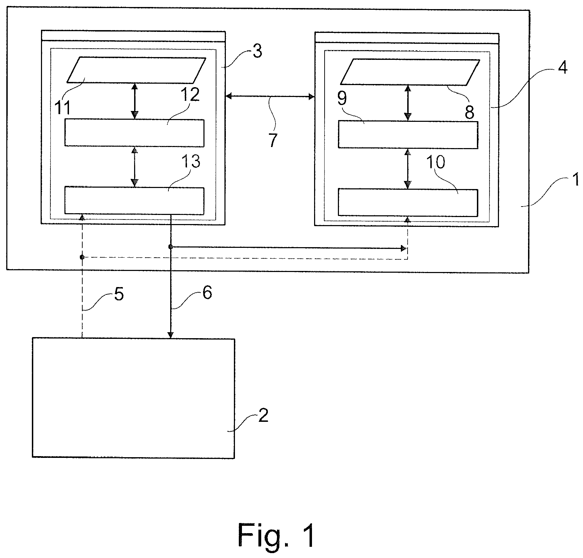

Es zeigt
- Fig. 1: eine erfindungsgemässe Sensoreinheit mit einem Sicherheitskontrollgerät.

Die Figur 1 zeigt ein Blockschaltbild einer erfindungsgemässen Sensoreinheit mit einem Sensor 1 und einem Sicherheitskontrollgerät 2. Der Sensor 1 weist eine erste und eine zweite voneinander jeweils unabhängige Datenverarbeitungseinheit 3, 4 auf. Diese beiden Datenverarbeitungseinheiten 3, 4 unterscheiden sich in der konkreten Ausgestaltung ihrer Hardware, sind jedoch hinsichtlich ihrer Arbeitsweise und Wirkungsweise funktionsgleich. Die Datenverarbeitungseinheiten 3, 4 sind über einen einzigen nur schematisch dargestellten Bus mit dem Sicherheitskontrollgerät 2 verbunden. Über den gemeinsamen Bus werden in Übertragungsrichtung 5 Anfragendaten bzw. Steuerbefehle oder Kommandos vom Sicherheitskontrollgerät an die Verarbeitungseinheiten 3, 4 gesendet und in Übertragungsrichtung 6 werden Antwortdaten, wie Sensormesswerte, Sensoridentifikationsnummern und ähnliches übertragen.

Die erste Datenverarbeitungseinheit 4 weist eine erste Verarbeitungseinheit 8 auf, welche Daten - also die Anfragedaten oder die Antwortdaten - plausibilisiert und verarbeitet. Die Prüfung bzw. Plausibilisierung der Daten kann über bekannte Prüfverfahren, wie beispielsweise dem CRC-Verfahren mittels sogenannter Check-Summen erfolgen.

Dieser ersten Verarbeitungseinheit 8 vorgeschaltet ist eine erste Datenübergabeeinheit 9, welche die Daten entsprechend eines Standards, insbesondere entsprechend dem IO-Link Safety Standard ver- oder entpackt. Vor der ersten Datenübergabeeinheit 9 ist eine erste Sende- und Empfangseinheit 10 angeordnet, welche die Datenpakete codiert bzw. decodiert.

Dementsprechend weist in der selben Anordnung die zweite Datenverarbeitungseinheit 3 eine zweite Verarbeitungseinheit 11, eine zweite Datenübergabeeinheit 12 und eine zweite Sende- und Empfangseinheit 13 auf. Die beiden Datenverarbeitungseinheiten 3 und 4 sind über eine Meldeleitung miteinander verbunden, über die Ausnahme-Meldungen, wie beispielsweise ein unterschiedliche Prüfergebnisse übermittelt werden.

Es wird darauf hingewiesen, dass für den Fall, dass der Sensor 1 als ein RFID-Empfänger ausgeführt wird, die RFID-Sendereinheit in Figur 1 nicht dargestellt ist.

Es sei vermerkt, dass das hier beschriebene Verfahren, das hier beschriebene System und der hier beschriebene Sensor immer in Zusammenhang mit Sicherheitstüren für Maschinen und Fertigungseinrichtungen beschrieben wurde. Es versteht sich von selbst, dass die erfindungsgemässe Lösungen für das Verfahren, System und den Sensor auch auf anderen Gebieten eingesetzt werden kann, bei denen eine Annäherung einer Komponente an eine andere detektiert werden muss. Beispielsweise könnte die Erfindung bei Schubladen (prüfen ob diese offen oder geschlossen ist) oder bei Roboterarmen (Annäherungsprüfungen, oder Werkzeugerkennung) zur Anwendung gelangen.

### BEZUGSZEICHENLISTE:

- 1: Sensor
- 2: Sicherheitskontrollgerät
- 3: Erste Datenverarbeitungseinheit
- 4: Zweite Datenerarbeitungseinheit
- 5: Übertragungsrichtung der Anfragedaten
- 6: Übertragungsrichtung der Antwortdaten
- 7: Übertragung von Ausnahme-Daten
- 8: Erste Verarbeitungseinheit
- 9: Erste Datenübergabeeinheit
- 10: Erste Sende- und Empfangseinheit
- 11: Zweite Verarbeitungseinheit
- 12: Zweite Datenübergabeeinheit
- 13: Zweite Sende- und Empfangseinheit

## Patentansprüche

1. Verfahren zur seriellen Übermittlung von Daten eines Sensors (1) an ein Sicherheitskontrollgerät (2), wobei der Sensor (1) zwei Datenverarbeitungseinheiten (3, 4) aufweist, welche ihnen zugeführte Daten prüfen und verarbeiten,
**dadurch gekennzeichnet,**
**dass** jeder Datenverarbeitungseinheit (3, 4) zeitgleich dieselben Daten zugeführt werden,
**dass** die beiden Datenverarbeitungseinheiten unabhängig voneinander arbeiten und dass die Datenverarbeitungseinheiten (3, 4) nach Empfang der Daten zeitglich eine Prüfung der zugeführten Daten durchführen.

2. Verfahren zur seriellen Übermittlung von Daten des Sensors nach Anspruch 1,
**dadurch gekennzeichnet,**
**dass** die zugeführten Daten entweder Anfragedaten des Sicherheitskontrollgerätes (2) oder Prozessdaten des Sensors (1) sind.

3. Verfahren zur seriellen Übermittlung von Daten des Sensors nach Anspruch 1 oder 2,
**dadurch gekennzeichnet,**
**dass** die Datenverarbeitungseinheiten (3, 4) die Ergebnisse ihrer Prüfung miteinander vergleichen und bei fehlender Übereinstimmung einen Fehler an das Sicherheitskontrollgerät (2) melden.

4. Verfahren zur seriellen Übermittlung von Daten des Sensors nach Anspruch 1, 2 oder 3
**dadurch gekennzeichnet,**
**dass** bei der Prüfung die Datenkonsistenz der empfangenen Daten geprüft wird.

5. Verfahren zur seriellen Übermittlung von Daten des Sensors nach einem der vorigen Ansprüche,
**dadurch gekennzeichnet,**
**dass** Antwortdaten von einer ersten Datenverarbeitungseinheiten (3) zeitgleich an das Sicherheitskontrollgerät (2) und die zweite Datenverarbeitungseinheit (4) zurückgegeben werden und
**dass** das Sicherheitskontrollgerät (2) und die zweite Datenverarbeitungseinheit (4) zeitgleich eine Prüfung der Antwortdaten durchführen.

6. Verfahren zur seriellen Übermittlung von Daten des Sensors nach einem der vorigen Ansprüche,
**dadurch gekennzeichnet,**
**dass** die zweite Datenverarbeitungseinheit (4) und das Sicherheitskontrollgerät (2) die Ergebnisse ihrer Prüfung miteinander vergleichen und bei fehlender Übereinstimmung die Antwortdaten als fehlerhaft beurteilen.

7. Verfahren zur seriellen Übermittlung von Daten des Sensors nach dem vorigen Anspruch,
**dadurch gekennzeichnet,**
**dass** die Prüfung sowohl die Datenkonsistenz als auch die Verarbeitung der Daten umfasst.

8. Verfahren zur seriellen Übermittlung von Daten des Sensors nach einem der vorigen Ansprüche,
**dadurch gekennzeichnet,**
**dass** die Kommunikation des Sensors (1), d.h. insbesondere der Datenverarbeitungseinheiten (3, 4) mit dem Sicherheitskontrollgerätes (2) unter Einhaltung des IO-Link Safety-Standards, des AS-i Bus Standards, des CANopen-Safety-Standard oder des Profisafe Standards für Profibus/Profinet erfolgt.

9. Sensoreinheit mit einem Sensor (1), einem Sicherheitskontrollgerät (2) und dem Sensor (2) zugeordneten Datenverarbeitungseinheiten (3, 4),
**dadurch gekennzeichnet,**
**dass** das Sicherheitskontrollgerät (2) über einen gemeinsamen seriellen Bus mit den Datenverarbeitungseinheiten (3, 4) verbunden ist und
**dass** die Datenverarbeitungseinheiten unabhängig voneinander sind und dabei dazu ausgelegt sind, zeitgleich die Verarbeitung zugeführter Daten durchzuführen.

10. Sensoreinheit nach Anspruch 9,
**dadurch gekennzeichnet,**
**dass** der Bus zur bidirektionalen Datenübertragung ausgebildet ist.

11. Sensoreinheit nach Anspruch 9 oder 10,
**dadurch gekennzeichnet,**
**dass** das Sicherheitskontrollgerät (2) über einen gemeinsamen seriellen Bus mit den Datenverarbeitungseinheiten (3, 4) verbunden ist und
**dass** die zweite Datenverarbeitungseinheit (3, 4) und das Sicherheitskontrollgerät (2) dazu ausgelegt sind, zeitgleich die Datenkonsistenz und die korrekte Verarbeitung der ihnen von der ersten Datenverarbeitungseinheit zugeführten Daten zu prüfen.

12. Sensoreinheit nach Anspruch 9 oder 10,
**dadurch gekennzeichnet,**
**dass** das Sicherheitskontrollgerät (2) und die Datenverarbeitungseinheiten (3, 4), dazu ausgelegt sind, miteinander zu kommunizieren und dabei den IO-Link Safety-Standard, den AS-i Bus Standard, den CANopen-Safety-Standard oder den-Profisafe Standard für Profibus/Profinet zu nutzen.

13. Sensoreinheit nach einem der Ansprüche 9 bis 11,
**dadurch gekennzeichnet,**
**dass** der Sensor (1) als RFID-Empfänger ausgebildet ist und dass dieser auf die Annäherung eines RFID-Senders anspricht.

14. Sensoreinheit nach dem Anspruch 12,
**dadurch gekennzeichnet,**
**dass** im RFID-Sender Prozessdaten des Sensors (1) abgelegt sind, und dass der RFID-Empfänger dazu ausgebildet ist, diese auszulesen und in seinen Datenverarbeitungseinheiten (4, 5) zu verarbeiten.

15. System zur Absicherung von Gefahrenbereichen von Fertigungseinrichtungen, mit einer Sensoreinheit nach einem der Ansprüche 9 bis 13.
